Europäisches Patentamt

**European Patent Office** (11) Numéro de publication: **0 028 575**

Office européen des brevets **A1**

(19)

(12) ## DEMANDE DE BREVET EUROPEEN

(21) Numéro de dépôt: 80401737.4

(22) Date de dépôt: 05.12.80

(51) Int. Cl.³: **F 17 D 3/08**
**G 01 F 25/00**

(43) Date de publication de la demande:
13.05.81 Bulletin 81/19

(84) Etats Contractants Désignés:
AT BE CH DE FR GB IT LI LU NL SE

(71) Demandeur: SOCIETE DES TRANSPORTS PETROLIERS
PAR PIPE-LINE
7 & 9, rue des Frères Morane
F-75738 Paris Cedex 15(FR)

(72) Inventeur: Gaudart, Jean-Pierre
5 rue de la République Résidence le Prieuré
F-78470 Remy-Les-Chevreuse Yvelines(FR)

(72) Inventeur: Bordaz, Claude Robert André
31 rue Ribéra
F-75016 Paris(FR)

(72) Inventeur: Mocquart, Jacques Marcel
19 rue Alexandre Dumas
F-94210 La Varenne-Saint-Hilaire(FR)

(74) Mandataire: Casanova, André CABINET ARMENGAUD
JEUNE CASANOVA, AKERMAN, LEPEUDRY et al,
23 boulevard de Strasbourg
F-75010 Paris(FR)

(54) **Gare de racleur et boucle-étalon équipée de telles gares pour des installations de comptage des volumes de fluide circulant dans des lignes de comptage.**

(57) L'invention concerne les gares de racleur et les boucles étalons pour les installations de comptage.

Les gares 16 comprennent une rampe mobile 34, pour la réception et le lancement d'une sphère 28, et manoeuvrée par un vérin 44. Un vérin de blocage 45 coopère avec la rampe mobile 34 pour maintenir la sphère 28 en gare 16 tant que le débit d'étalonnage n'est pas atteint. La rampe 34, présentant une pente négative en réception, assure, même aux débits d'entrée faibles, le transfert de la sphère 28 en amont du vérin de blocage 45. En position de lancement, la pente positive de la rampe 34 permet l'introduction de la sphère 28 dans le cône de lancement 29, dès que le vérin de blocage 45 est rétracté. Une boucle-étalon munie de telles gares horizontales ne présente pas de portion morte et permet de réduire d'un tiers la longueur de l'ensemble.

Application à l'équipement des bancs de comptage pour produits pétroliers.

EP 0 028 575 A1

./...

_Fig.5_

L'invention a pour objet une gare de racleur, du type utilisable notamment pour l'équipement des boucles-étalons des installations de comptage des volumes de fluide circulant dans au moins une ligne de comptage.

L'invention a également pour objet une boucle-étalon équipée de gares de racleur selon l'invention, ainsi qu'une installation de comptage obtenue en combinant en superposition une boucle-étalon selon l'invention et une pluralité de lignes de comptage, dont la longueur se trouve en harmonie avec la valeur de l'encombrement longitudinal de la bouche de comptage selon l'invention.

Pour procéder au nettoyage interne des canalisations de transport de produits pétroliers notamment, ou pour séparer les produits entre-eux il est connu d'utiliser des racleurs, ou des pistons, tels que des sphères en néoprène ou polyuréthane, d'un diamètre égal ou légèrement supérieur au diamètre interne de la canalisation à nettoyer, qui sont entraînés dans la canalisation avec le fluide sous pression circulant dans celle-ci.

Afin de permettre l'introduction et l'enlèvement des racleurs, il est prévu des gares de racleur, définies chacune par une chambre de section supérieure à celle de la canalisation et délimitée par une enveloppe généralement cyclindrique se raccordant à la canalisation par au moins un tronc de cône. Après isolement de cette gare au moyen de vannes, et vidange de la chambre interne, une porte à ouverture rapide, prévue dans l'enveloppe de la gare, peut être ouverte pour disposer un racleur dans la gare ou pour l'en retirer. Cette porte permet également l'évacuation de la calamine, de la rouille ou des sédiments qui auront pu être détachés de la paroi interne d'une canalisation par un racleur, lors de son parcours entre deux gares dans un oléoduc.

Par ailleurs, et pour des raisons économiques évidentes, nul n'ignore l'importance qui s'attache à la connaissance précise des volumes de fluide entrant et sortant d'un réseau de canalisations.

Dans un premier temps, l'utilisation de compteurs volumétriques dits "à déplacement positif" (équipés de pistons alternatifs ou rotatifs) pour effectuer ce comptage, s'est avérée satisfaisante. Ces compteurs volumétriques présentent en effet des coefficients de correction indépendants des variations de débit ou de viscosité des produits transportés dans les canalisations.

Cependant, l'augmentation importante des débits dans les installations de chargement, de déchargement et de transport des produits pétroliers, liée à la mise en service de canalisations de grand diamètre a conduit au remplacement, vers les années 70, des compteurs à déplacement positif par des mesureurs-turbines.

Si les mesureurs-turbines permettent, sous un faible encombrement et pour dès coûts d'investissement raisonnables, d'atteindre des débits élevés (de 1 à 1,5 m$^3$ par seconde), ils présentent, par contre, l'inconvénient d'avoir des coefficients de correction fonction de deux paramètres essentiellement variables : le débit et la viscosité du produit. Leur utilisation nécessite donc une adaptation permanente du coefficient de correction, les mesureurs-turbines devant être étalonnés chaque fois que l'un de ces deux paramètres varie.

A l'effet d'établir ce coefficient de correction, il a déjà été proposé de combiner sur le site à un banc de mesure comprenant un mesureur-turbine ou un ensemble de mesureurs-turbines, une boucle étalon permettant de tester chacun d'entre eux autant de fois qu'il est nécessaire. Des spécifications relatives à une telle boucle-étalon figurent dans une norme américaine API bien connue de l'homme du métier.

Une boucle-étalon est essentiellement constituée par une canalisation de mesure, dans laquelle circule un racleur tel qu'une sphère, et qui présente une portion de mesure, généralement en forme de U, définie entre deux détecteurs de passage du racleur, et dont le volume est parfaitement connu.

A la suite de la mise en série d'une ligne de comptage d'un banc de mesure, sur laquelle est disposé un mesureur-turbine, et de la boucle-étalon, on peut, par comparaison du volume compté par le mesureur-turbine à celui de la portion de mesure, dont l'écoulement est déterminé par les signaux des détecteurs de la boucle-étalon, établir le coefficient de correction du mesureur.

Les boucles-étalons peuvent être du type unidirectionnel ou bidirectionnel.

Dans le cas d'une boucle bidirectionnelle, la canalisation de mesure est prolongée par deux gares, du type gares de racleur, qui servent alternativement à l'expédition et à la réception d'un racleur, le flux du produit étant inversé par une vanne quatre voies qui assure la mise en série de la boucle-étalon avec une ligne de comptage sur laquelle se trouve le mesureur à tester.

Pour que l'opération soit valable, il est indispensable que le débit de passage dans le mesureur soit atteint dans la boucle-étalon au moment où la sphère déclenchera le premier détecteur. Du fait du temps de fonctionnement de la vanne quatre voies (environ 15 secondes) pour l'inversion du flux, le volume circulant, correspondant à la montée en débit dans un sens, est sensiblement égal à la moitié du temps de manoeuvre multiplié par 50 % du débit. C'est ce qui se produit dans les boucles-étalons de l'état de la technique, qui sont équipées de gares de racleur soit verticales, soit inclinées, et dans lesquelles le racleur, généralement une sphère, se trouve appuyé sur le tronc de cône que présentent les gares pour raccorder leur enveloppe cylindrique à la

4

canalisation de mesure, lorsqu'au cours de l'inversion du flux le débit devient nul.

L'emplacement du premier détecteur sensible au passage de la sphère,lors de son trajet dans la boucle-étalon, devra donc être tel qu'au moment du passage de la sphère le débit soit égal à celui transitant dans le mesureur. Cette condition impérative a conduit à prévoir, dans les installations connues, deux portions mortes, raccordant chacune l'une des extrémités de la portion de mesure à l'une des deux gares de racleur, et dont la longueur de chacune représente environ 50 % de l'encombrement longitudinal de la portion de mesure, c'est-à-dire 50 % de la longueur d'une branche du U que dessine la portion de mesure.

Par la présente invention, on se propose de remédier à ces inconvénients, en concevant une gare de racleur équipée de moyens permettant de réduire considérablement la longueur des portions mortes de la canalisation de mesure.

A cet effet, la gare de racleur selon l'invention comporte une enveloppe cylindrique fermée à une extrémité et de section supérieure à la section interne d'une canalisation, telle que la canalisation de mesure de la boucle-étalon dans laquelle circule un racleur tel qu'une sphère. L'enveloppe cylindrique se raccorde à cette canalisation par son autre extrémité, au moyen d'un tronc de cône, dont la partie de plus faible section interne, portant des moyens de liaison à l'extrémité correspondante de la canalisation, constitue respectivement, selon le sens de circulation du fluide, l'entrée ou la sortie de la gare pour le fluide et le racleur. L'enveloppe cylindrique présente une ouverture de piquage, constituant respectivement la sortie ou l'entrée de la gare pour le fluide ainsi,qu'éventuellement, une porte pour la mise en place et l'enlèvement du racleur. La gare de racleur selon l'invention se caractérise en ce qu'elle comprend un système de retenue empêchant le départ du racleur aussi longtemps qu'il peut être souhaitable.

Plus précisément , la gare de racleur selon l'invention se caractérise en ce qu'elle renferme une rampe longitudinale mobile de réception et de lancement de la sphère, pilotée entre une position de réception, dans laquelle elle présente une pente négative par rapport à l'axe longitudinal de la gare (c'est-à-dire une pente tendant à favoriser l'entrée de la sphère dans la gare), pour assurer, même aux très faibles débits d'entrée dans la gare par le tronc de cône, le transfert de la sphère vers l'extrémité fermée de la gare, et une position de lancement, dans laquelle la rampe présente une pente positive, pour assurer l'introduction de la sphère dans le tronc de cône.

Dans une forme préférée de réalisation, la rampe mobile est articulée en rotation autour d'un axe transversal, par l'une de ses extrémités voisine de la partie de plus faible section du tronc de cône, de façon à positionner la sphère dans le prolongement de la canalisation à l'entrée comme à la sortie de la gare, et à assurer son entrée et sa sortie de la gare à très bas débit.

Afin d'éviter tout effet de ventouse ou de succion, qui pourrait se développer entre la sphère et une rampe de surface continue et de forme correspondante, et entraîner un freinage de déplacement de la sphère sur la rampe, plus particulièrement en position de lancement, la rampe mobile est constituée de deux rails longitudinaux non adjacents, sur lesquels prend appui la sphère, et reliés l'un à l'autre par des traverses cintrées.

De plus, la rampe mobile comprend deux portions longitudinales en bout l'un de l'autre, et dont celle voisine de l'extrémité fermée de la gare présente une pente positive par rapport à celle voisine du tronc de cône, de façon à constituer un dièdre ouvert vers l'intérieur de la gare, et dans l'angle duquel la sphère est positionnée à débit nul. Les rotations de la rampe mobile sont assurées par au moins un vérin de manoeuvre, dont l'extrémité libre de l'élément mobile est articulée sur un élément de liaison à la rampe mobile.

Avantageusement, la gare selon l'invention comprend également une butée escamotable, susceptible de venir en saillie à l'intérieur de la gare pour empêcher la sortie de la sphère à grand débit. Cette butée escamotable est de préférence constituée par un vérin de blocage, dont l'élément mobile se déplace transversalement par rapport à la gare entre une position rétractée, autorisant l'entrée et la sortie de la sphère, et une position déployée, empêchant la sortie de la sphère.

La gare de racleur proposée par l'invention, en ne libérant la sphère que lorsque le débit d'étalonnage est atteint, permet de placer les détecteurs de la boucle-étalon à proximité des gares de racleur, lesquelles peuvent être disposées horizontalement, comme l'ensemble de la boucle-étalon, et ainsi réduire considérablement la longueur des portions mortes de la canalisation de mesure.

Par rapport aux installations connues, on peut ainsi réduire d'environ un tiers la longueur de la boucle-étalon, ce qui permet de réduire d'autant la longueur, donc le poids, et par conséquent le coût, de son châssis support.

Cette disposition est particulièrement intéressante lorsqu'on veut juxtaposer sur le plan vertical une pluralité de lignes de comptage d'un banc de mesure et la boucle-étalon, car elle conduit à une homogénéité entre les longueurs des deux ensembles, qui ne peut être atteinte dans les réalisations de l'état de la technique.

L'invention sera mieux comprise à l'aide d'un exemple de réalisation, qui sera décrit ci-après, à titre non limitatif, en référence aux dessins annexés dans lesquels :

la figure 1 représente un schéma de principe d'une installation de comptage combinant une pluralité de lignes de comptage et une boucle-étalon bidirectionnelle,

les figures 2 et 3 représentent schématiquement des vues latérales de gares de sphère de boucle-étalon bidirectionnelle de l'état de la technique,

la figure 4 représente une vue isométrique d'une installation selon la figure 1,

la figure 5 représente une vue de côté partiellement, en coupe d'une gare de sphère selon l'invention,

la figure 6 représente une vue en coupe selon VI-VI de la figure 5,

et la figure 7 représente une vue en coupe selon VII-VII de la figure 5.

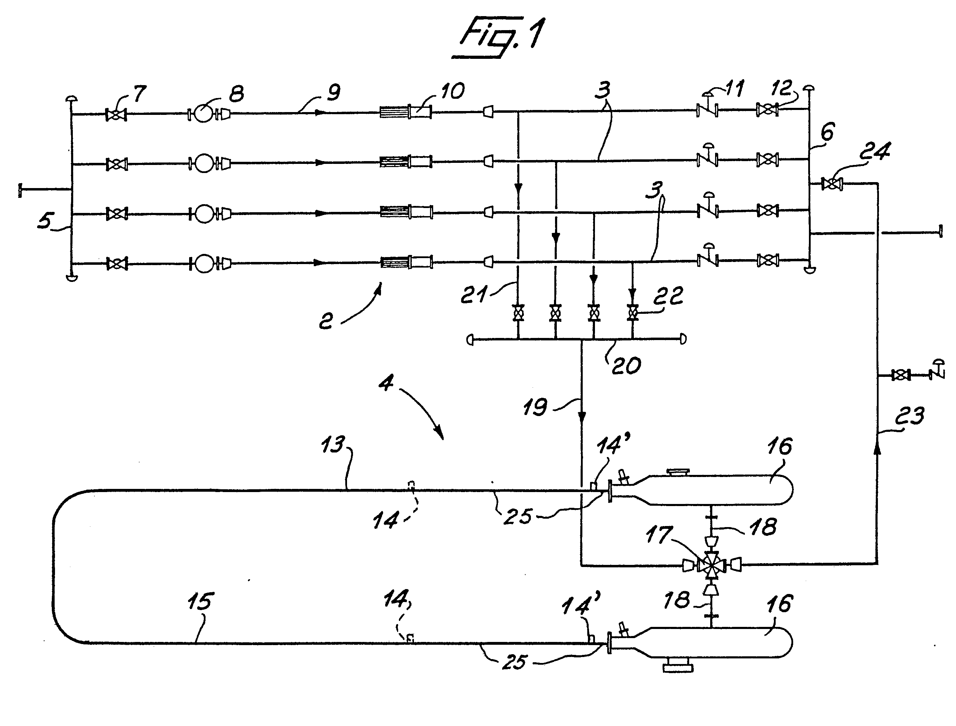

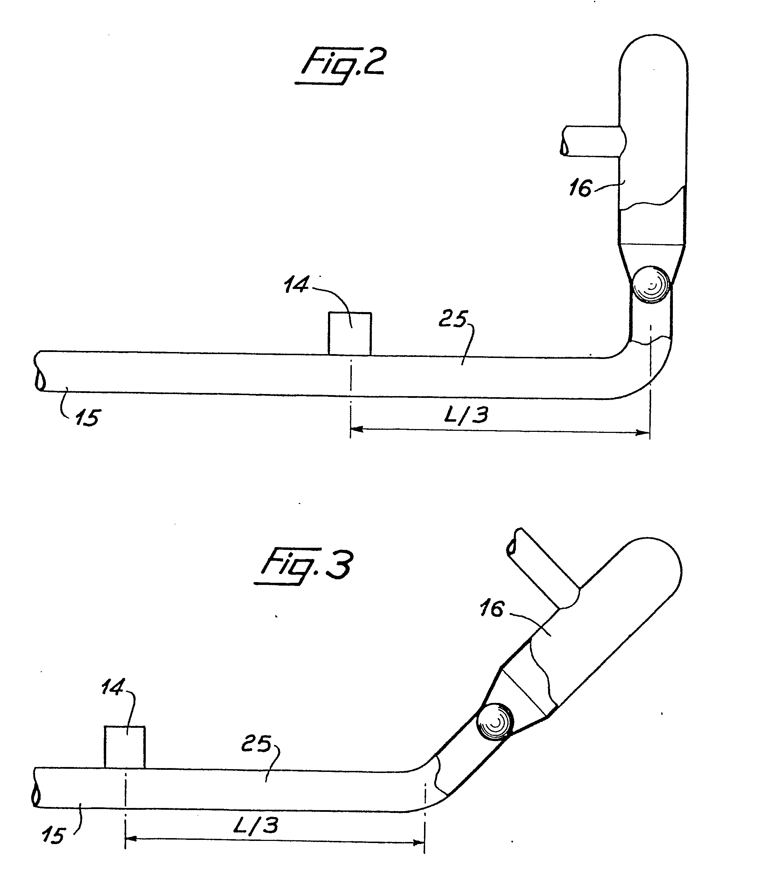

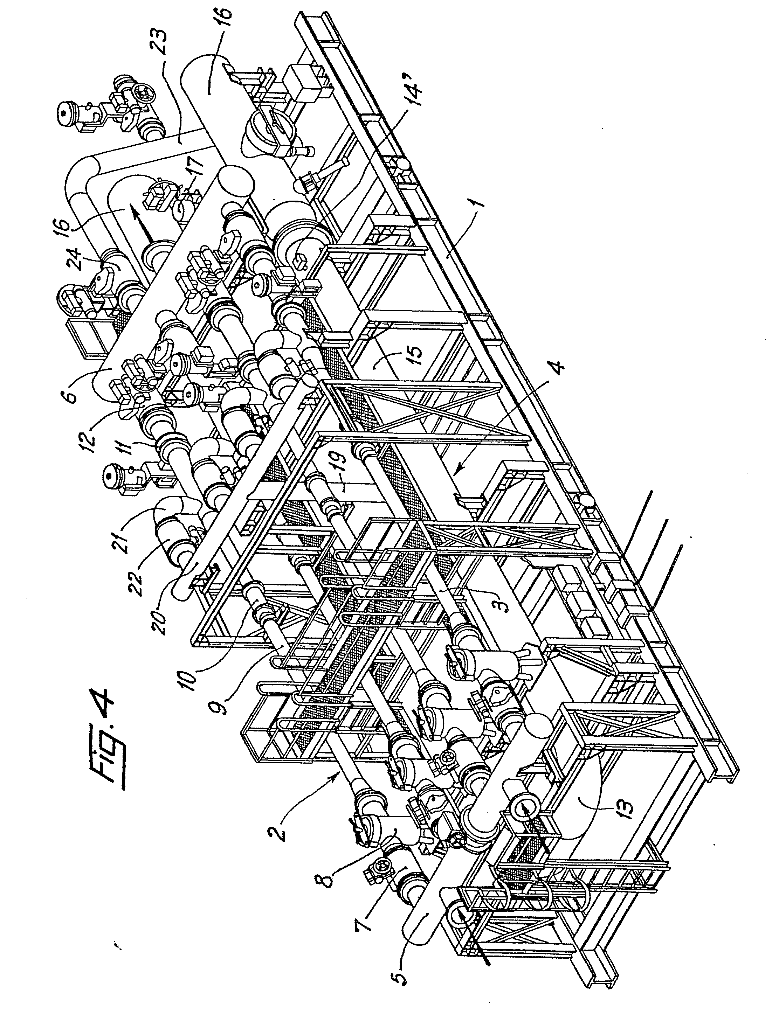

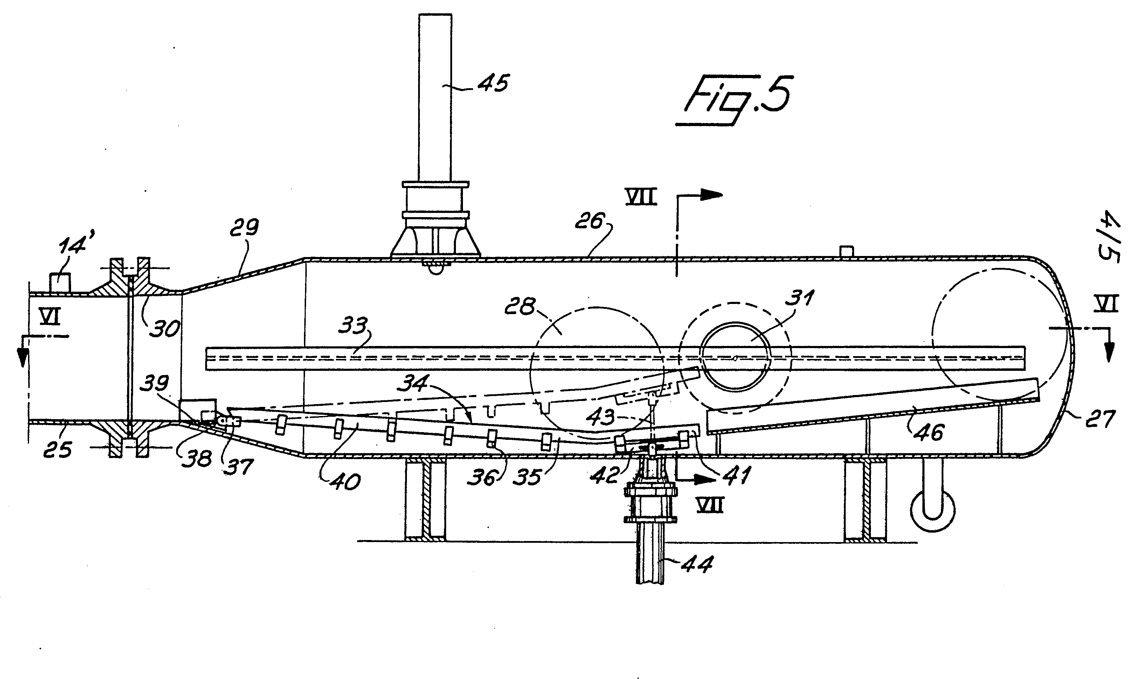

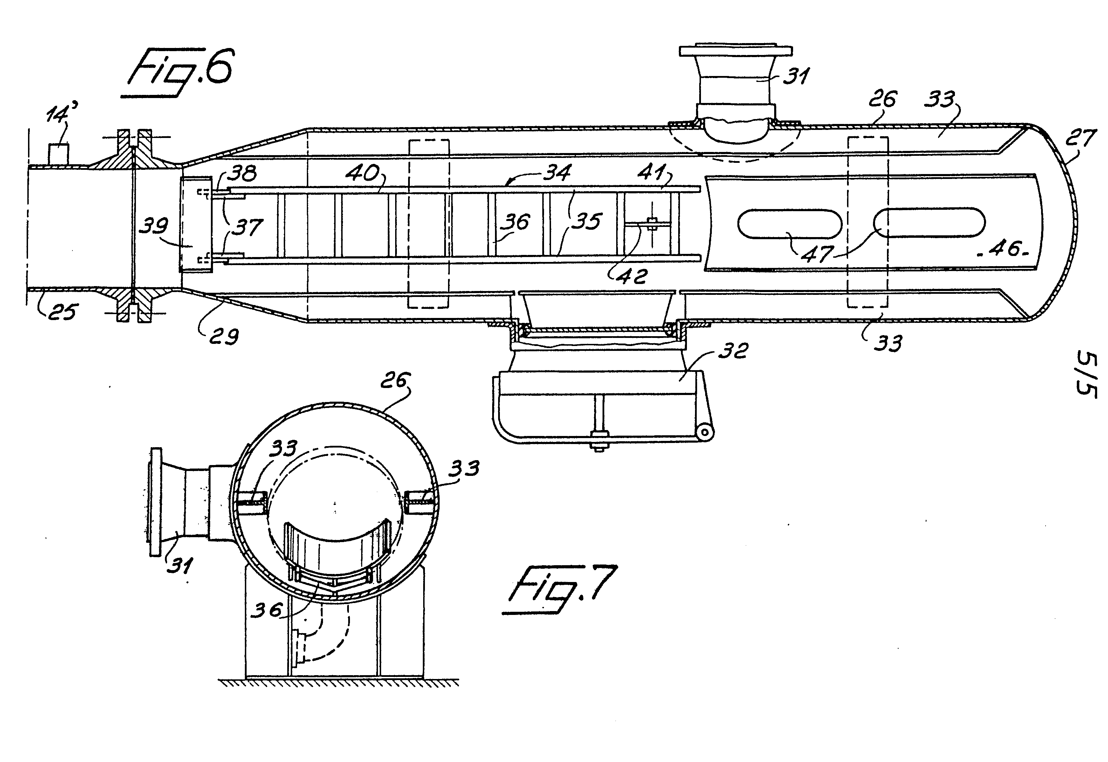

En référence aux figures 1 et 4, l'unité ou banc de comptage comprend un châssis 1, regroupant essentiellement, en superposition, une chaîne de comptage 2 composée, dans l'exemple choisi, de 4 lignes de comptage 3, horizontales et parallèles et une boucle-étalon bidirectionnelle 4.

Chacune des quatre lignes de comptage 3, qui sont identiques et insérées entre un collecteur d'amont 5 ou d'entrée du produit, muni d'un piquage permettant son raccordement sur une canalisation d'entrée et de quatre piquages constituant les départs vers les quatre lignes de comptage 3, et un collecteur d'aval 6 ou de sortie du produit, également muni de quatre piquages de raccordement aux quatre lignes de comptage 3 et d'un piquage de raccordement sur une canalisation de sortie , comprend, de l'amont vers l'aval, un robinet motorisé 7, un filtre 8, une portion de tranquillisation 9, un mesureur-turbine 10, une vanne de réglage du débit 11 et un robinet motorisé 12.

La boucle-étalon bidirectionnelle 4 comprend une canalisation de mesure 13, en forme de U, sur laquelle deux détecteurs 14, sensibles au passage d'une sphère, définissent une portion de mesure 15 d'un volume connu avec précision. Aux extrémités de la canalisation de mesure 13 sont raccordées deux gares de sphère 16, destinées à la réception et à l'envoi d'une sphère racleuse en néoprène susceptible de circuler dans la canalisation 13, en étant entraînée par le flux du produit, l'une des gares 16 au moins étant équipée d'une porte à ouverture rapide pour la mise en place et l'enlèvement de la sphère.

Une vanne quatre voie 17 motorisée, avec contrôle d'étanchéité, est raccordée à chacune des gares de sphère 16 au niveau d'un piquage latéral prévu sur la gare 16 à cet effet, par une canalisation de liaison 18. La vanne quatre voies 17 est également raccordée par une canalisation de liaison 19 à un collecteur d'étalonnage 20, lui-même raccordé à chacune des lignes de comptage 3, entre le mesureur-turbine 10 et la vanne 11 correspondant, par une canalisation de liaison 21 équipée d'un robinet motorisé 22 de dérivation. La vanne quatre voies 17 est enfin raccordée par une canalisation de liaison 23, sur laquelle est monté un robinet motorisé 24, au collecteur d'aval ou de sortie du produit 6.

Par une manoeuvre appropriée des robinets 12 et 22, l'ensemble des canalisations 18, 19, 21 et 23 et la vanne quatre voies 17 permettent la mise en série de chacune des quatre lignes de comptage 3 avec la boucle-étalon 4, la manoeuvre de la vanne quatre voies 17 permettant de plus l'inversion du flux dans la bouche-étalon.

Compte tenu du temps nécessaire à la vanne quatre voie motorisée 17, pour passer d'une configuration de débit établi dans un sens de la boucle-étalon à la configuration de débit établi dans l'autre sens, temps qui est de l'ordre de 15 secondes, et comme il est indispensable que le débit de passage dans le mesureur 10 soit effecti-

vement atteint dans la boucle-étalon au moment où la sphère déclenche le premier détecteur 14 qu'elle sensibilise sur son trajet d'une gare 16 à l'autre de la boucle-étalon, les boucles-étalons de l'état de la technique sont telles qu'une portion morte 25 de la canalisation de mesure 13 est prévue entre chaque extrémité de la portion de mesure 15 et la gare de sphère 16 correspondante, qui est soit verticale soit inclinée sur le plan horizontal, comme cela est représenté sur les figures 2 et 3. Ces dispositions, qui sont défavorables sur le plan de l'encombrement vertical des gares de sphère 16, permettent d'utiliser les effets de la gravité pour positionner la sphère dans le tronc de cône de raccordement de la chambre élargie de la gare 16 à la portion morte 25 de la canalisation de mesure 13, lorsque le débit devient nul au cours de l'inversion du flux, ainsi éventuellement que pour freiner la sphère lors de son arrivée dans une gare 16.

De plus et surtout, la longueur de la portion morte 25, choisie pour que le débit soit bien établi au moment du passage de la sphère en regard du premier détecteur 14, atteint fréquemment 10 mètres et représente généralement 1/3 de l'encombrement longitudinal total L de la canalisation de mesure 13, soit encore 1/3 de la longueur totale d'une branche du U que dessine cette canalisation, ce qui constitue un inconvénient majeur sur le plan de la longueur du dispositif, de son poids et de son coût.

Ces inconvénients sont supprimés par l'utilisation de gares 16 du type de celle représentée sur les figures 5 à 7. Une telle gare 16 comprend une enveloppe cylindrique 26, fermée à une extrémité 27, et de section nettement supérieure au diamètre d'une sphère de néoprène 28, qui correspond au diamètre interne de la canalisation de mesure 13 de la boucle-étalon 4, à laquelle l'autre extrémité de l'enveloppe cylindrique 26 se raccorde par un tronc de cône 29, dont la partie de plus faible diamètre interne se prolonge d'une bride 30 de raccordement avec centrage et portée métallique, l'étanchéité étant assurée par un joint torique (non représenté).

L'enveloppe cylindrique 26 présente également un piquage latéral 31, pour raccordement à la canalisation de liaison 18, reliant la gare 16 à la vanne quatre voies 17, ainsi qu'une porte à ouverture rapide 32 pour la mise en place et l'enlèvement de la sphère 28.

Deux guides longitudinaux 33 sont fixés, en positions diamétralement opposées dans un plan horizontal, sur la paroi interne de l'enveloppe cylindrique 26 et du tronc de cône 29, pour maintenir latéralement la sphère 28 sensiblement dans le prolongement de la canalisation 13. Une rampe longitudinale mobile 34, constituée de deux rails 35, longitudinaux parallèles et non adjacents, reliés l'un à l'autre par des traverses cintrées 36, est articulée en rotation, autour d'un axe horizontal et transversal, par deux attaches 37 fixées aux extrémités des rails 35 voisines du tronc de cône 29, pivotant sur deux ferrures 38 solidaires d'une plaque support 39 horizontale et montée dans la partie de plus faible diamètre interne du tronc de cône 29. L'écartement des rails 35 et l'articulation en rotation de la rampe 34 sont ainsi déterminés que la sphère 28 puisse reposer en équilibre stable sur les deux rails 35, et que la sphère 28 se trouve, à l'extrémité de la rampe voisine du tronc de cône 29, dans le prolongement longitudinal de la canalisation 13.

L'absence d'une importante surface continue de contact entre la sphère 28 et la rampe mobile 34 permet d'eviter tout effet de ventouse ou tout phénomène de pompage ou de succion, qui tendrait à freiner le déplacement de la sphère 28 sur la rampe 34. Chacun des deux rails 35 est constitué de deux parties longitudinales 40 et 41, en bout l'une de l'autre, la partie 41 la plus proche de l'extrémité fermée 27 de la gare 16, et de longueur inférieure à celle de la partie 40,

11

la plus proche du tronc de cône 29, étant inclinée sur cette dernière avec une pente positive, par exemple de 13%, c'est-à-dire une pente telle que les parties 40 et 41 constituent un dièdre ouvert vers l'intérieur de la gare 16, et dans l'angle duquel la sphère 28 vient se positionner à débit nul.

Un bras 42, reliant deux traverses 36 de la partie 41 des rails 35, est monté tourillonnant sur l'extrémité libre de la tige 43, débouchant transversalement dans la gare 16, d'un vérin de manoeuvre 44.

Un second vérin 45 est également monté sur la gare 16, de sorte que sa tige vienne, en position déployée du vérin, faire saillie radialement à l'intérieur de la gare 16, entre le tronc de cône 29 et le dièdre des rails 35, sensiblement en regard du milieu de la partie 40 de ces rails 35. Le vérin 45 constitue ainsi un vérin de blocage, dont la tige joue le rôle d'une butée escamotable susceptible d'être déplacée entre une position rétractée, autorisant l'entrée et la sortie de la sphère 28, et une position déployée, empêchant la sortie de la sphère 28.

La commande du vérin de blocage 45 s'effectue en séquence avec celle du vérin de manoeuvre 44, ce dernier permettant le pilotage en rotation de la rampe mobile 34, entre une position de réception de la sphère 28, dans laquelle la rampe 34 présente, au niveau de la partie 40 des rails 35, une pente négative, par exemple de 6 %, par rapport à l'axe longitudinal et horizontal de la gare 16, c'est-à-dire une pente tendant à faciliter l'introduction de la sphère 28 à bas débit et son positionnement dans l'angle du dièdre, et une position de lancement de la sphère 28, dans laquelle la rampe 34 présente une pente positive, par exemple de 7 %, au niveau de la partie 40 des rails 35, pour assurer le déplacement de la sphère 28 vers le tronc de cône 29. A grand débit la sphère 28 vient en butée contre la tige déployée du vérin de blocage 45, qui assure le maintien en gare 16 de la sphère 28 tant que le débit d'étalonnage n'est pas atteint.

12

Dès que la tige du vérin de blocage 45 sera rétractée, c'est-à-dire peu après la fin de la manoeuvre de la vanne quatre voies 17, le vérin 44 imprimera à la rampe 34 une pente positive qui favorisera l'introduction de la sphère 28 dans le tronc de cône 29, et son lancement dans la canalisation 13.

La pente négative présentée par la rampe 34 en position de réception assure, même aux débits d'entrée très faibles, le transfert de la sphère 28 vers l'extrémité fermée 27 de la gare 16, au-delà du vérin de blocage 45, dont la tige peut ensuite être déployée à l'intérieur de la gare 16.

Pour assurer un freinage convenable de la sphère 28, après son entrée dans la gare 16 et à grand débit, il est prévu une rampe inclinée fixe 46, présentant une pente positive, et disposée dans le prolongement de la partie 41 des rails 35 de la rampe mobile 34. Cette rampe fixe 46 est percée d'ajours 47 facilitant le retour de la sphère 28 en position de repos dans l'angle du dièdre de la rampe mobile 34, lorsque le débit s'est annulé.

Grâce à l'utilisation de gares 16 selon l'invention, munies d'un dispositif ne libérant la sphère 28 que lorsque le débit d'étalonnage est atteint, les détecteurs peuvent être placés à proximité immédiate des gares 16 sur la canalisation de mesure 13, comme cela est représenté par l'indice 14' sur les figures 4, 5 et 6, ce qui ramène la longueur de la portion morte à une valeur de 0,5 mètre, alors que dans les installation antérieures cette longueur atteignait 10 mètres.

La réduction d'environ un tiers de la longueur totale de la bouche-étalon ainsi obtenue, se traduit par une réduction correspondante du poids et du coût non seulement de cette boucle-étalon, mais également de son châssis 1.

Ceci permet de réaliser un banc de comptage, dont la longueur de l'ensemble des lignes de comptage 3 est homogène à celle de la boucle-étalon 4, ce qui est particulièrement intéressant, lorsque ces deux ensembles sont superposés, comme représenté sur la figure 4. Avantagement, enfin, la porte à ouverture rapide 32 est disposée en regard de l'angle du dièdre que présente la rampe mobile 34 de façon à faciliter l'enlèvement de la sphère 28 qui se positionne dans l'angle de ce dièdre à débit nul.

14

REVENDICATIONS

1.- Gare de racleur, par exemple de sphère 28, notamment pour une boucle-étalon 4 d'une installation de comptage des volumes de fluides circulant dans au moins une ligne de comptage 3, la gare 16 comportant une enveloppe cylindrique 26, fermée à une extrémité 27, et de section supérieure à la section interne d'une canalisation,telle que la canalisation de mesure 13 de la boucle-étalon 4, dans laquelle circule un racleur tel qu'une sphère, et à laquelle l'enveloppe cylindrique 26 se raccorde par son autre extrémité au moyen d'un tronc de cône 29,dont la partie de plus faible section interne,portant des moyens de liaison 30 à l'extrémité correspondante de la canalisation 13, constitue respectivement, selon le sens de circulation du fluide, l'entrée ou la sortie de la gare 16 pour le fluide et la sphère 28, l'enveloppe cylindrique 26 présentant une ouverture de piquage 31, constituant respectivement la sortie ou l'entrée de la gare 16 pour le fluide, ainsi, éventuellement, qu'une porte 32 pour la mise en place et l'enlèvement de la sphère 28, caractérisée en ce qu'elle renferme une rampe longitudinale mobile 34, de réception et de lancement de la sphère 28,pilotée entre une position de réception, dans laquelle elle présente une pente négative par rapport à l'axe longitudinal de la gare 16, pour assurer, même aux très faibles débits d'entrée dans la gare 16 par le tronc de cône 29,le transfert de la sphère 28 vers l'extrémité fermée 27 de la gare 16, et une position de lancement, dans laquelle la rampe 34 présente une pente positive, pour assurer l'introduction de la sphère 28 dans le tronc de cône 29.

2.- Gare de racleur selon la revendication 1, caractérisée en ce que la rampe mobile 34 est articulée en rotation, autour d'un axe transversal, par l'une de ses extrémités voisine de la partie de plus faible section du tronc de cône 29, de façon à positionner la sphère 28 dans le prolongement de la canalisation 13 à l'entrée comme à la sortie de la gare 16, et à assurer son entrée et sa sortie de la gare à très bas débit.

3.- Gare de racleur selon l'une des revendications 1 et 2, caractérisée en ce que la rampe mobile 34 comprend deux rails longitudinaux 35 non adjacents, sur lesquels prend appui la sphère 28, et reliés l'un à l'autre par des traverses cintrées 36.

4.- Gare de racleur selon l'une quelconque des revendications 1 à 3, caractérisée en ce que la rampe mobile 34 comprend deux portions longitudinales 40, 41 en bout l'une de l'autre, et dont celle 41 voisine de l'extrémité fermée 27 de la gare 16 présente une pente positive par rapport à celle 40, voisine du tronc de cône 29, de façon à constituer un dièdre ouvert vers l'intérieur de la gare 16, et dans l'angle duquel la sphère 28 est positionnée à débit nul.

5.- Gare selon l'une quelconque des revendications 1 à 4, caractérisée en ce que les rotations de la rampe mobile 34 sont assurées par au moins un vérin de manoeuvre 44, dont l'extrémité libre de l'élément mobile 43 est articulée sur un élément de liaison 42 à la rampe mobile 34.

6.- Gare selon l'une quelconque des revendications 1 à 5, caractérisée en ce qu'elle comprend également une butée escamotable susceptible de venir en saillie à l'intérieur de la gare 16 pour empêcher la sortie de la sphère 28 à grand débit.

7.- Gare selon la revendication 6, caractérisée en ce que la butée escamotable est constituée par un vérin de blocage 45, dont l'élément mobile se déplace transversalement par rapport à la gare 16 entre une position rétractée, autorisant l'entrée et la sortie de la sphère 28 et une position déployée empêchant la sortie de la sphère 28.

8.- Gare selon l'une quelconque des revendications 1 à 7, caractérisée en ce qu'elle renferme également, dans sa partie voisine de son extrémité fermée 27, une rampe inclinée fixe 46, présentant une pente positive par rapport à l'axe longitudinal de la gare 16,

16

pour assurer, à grand débit, le freinage de la sphère 28 après son entrée dans la gare 16.

9.- Boucle-étalon 4 pour une installation de comptage des volumes de fluides circulant dans au moins une ligne de comptage 3, la boucle comportant une canalisation de mesure 13 présentant une portion de mesure 15, définie entre deux détecteurs de passage 14' d'une sphère 28, et deux portions mortes 25 raccordant chacune l'une des extrémités de la portion de mesure 15 à l'une de deux gares 16 de la sphère, chaque gare 16 de racleur étant reliée à une vanne quatre voies 17, elle-même reliée d'une part à chacune des lignes de comptage 3, en aval d'un mesureur à tester 10 que comporte cette dernière, et d'autre part à un collecteur d'aval 6 de la ou des lignes de comptage 3, pour assurer la mise en série de la boucle-étalon 4 avec le mesureur à tester 10 et pour inverser le flux parcourant la boucle-étalon 4, caractérisée en ce que les gares 16 sont réalisées selon l'une quelconque des revendications 1 à 8 précédentes, la boucle-étalon 4 étant disposée horizontalement et présentant des portions mortes 25 de faible longueur du fait du positionnement des détecteurs de passage 14' de la sphère à proximité des gares de racleur 16.

Fig.1

_Fig.2_

14

25

16

15

L/3

_Fig.3_

16

14

25

15

L/3

_Fig.4_

0028575

_Fig.5_

45

VII

29

26

14'

28

31

VII

30

33

39

34

43

27

25

38 37

40

36 35

42 41

VII

44

46

0028575

0028575

Fig.6

Fig.7

Office européen
des brevets

**RAPPORT DE RECHERCHE EUROPEENNE**

| | **DOCUMENTS CONSIDERES COMME PERTINENTS** | | **CLASSEMENT DE LA DEMANDE (Int. Cl. 3)** |
|---|---|---|---|
| Catégorie | Citation du document avec indication, en cas de besoin, des parties pertinentes | Revendication concernée | |
| | FR - A - 1 596 018 (GENERAL DES-CALING COMPANY LTD)<br><br>* Revendication 1; figures *<br><br>-- | 1,2,3, 5 | F 17 D 3/08<br>G 01 F 25/00 |
| | L'Industrie du Pétrole en Europe" gaz-chemie ed. Olivier Lesourd Paris, vol. 45, no. 486, septembre 1977, pages 39-50<br>P. THEODULE: "Haute précision dans le comptage des produits pétro-liers"<br><br>* Figures 1 et 2 *<br><br>-- | 1 | |
| A | FR - A - 2 399 077 (NATIONAL CAR-BONISING COMPANY LTD)<br><br>* Page 1, ligne 5 - page 2, ligne 40; figures *<br><br>-- | | **DOMAINES TECHNIQUES RECHERCHES (Int. Cl. 3)**<br><br>F 17 D<br>G 01 F<br>B 08 B<br>F 16 K |
| A | GB - A - 2 026 647 (WILLIS OIL TOOL CO)<br><br>* Résumé; figures *<br><br>---- | | |

**CATEGORIE DES DOCUMENTS CITES**

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons

&: membre de la même famille,
document correspondant

✗ Le présent rapport de recherche a été établi pour toutes les revendications

| Lieu de la recherche | Date d'achèvement de la recherche | Examinateur |
|---|---|---|
| La Haye | 10-02-1981 | V. REETH |

OEB Form 1503.1 06.78